Europäisches Patentamt

European Patent Office

Office européen des brevets

(11) Publication number : **0 490 796 A1**

# EUROPEAN PATENT APPLICATION

(21) Application number : **91420447.4**

(51) Int. Cl.⁵ : **C09K 3/18**

(22) Date of filing : **12.12.91**

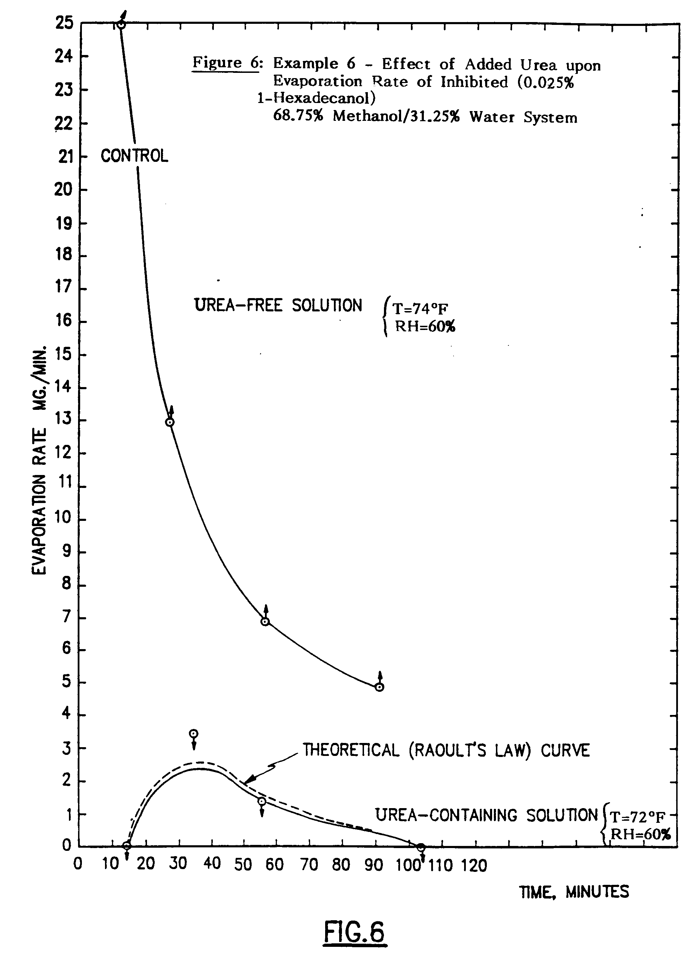

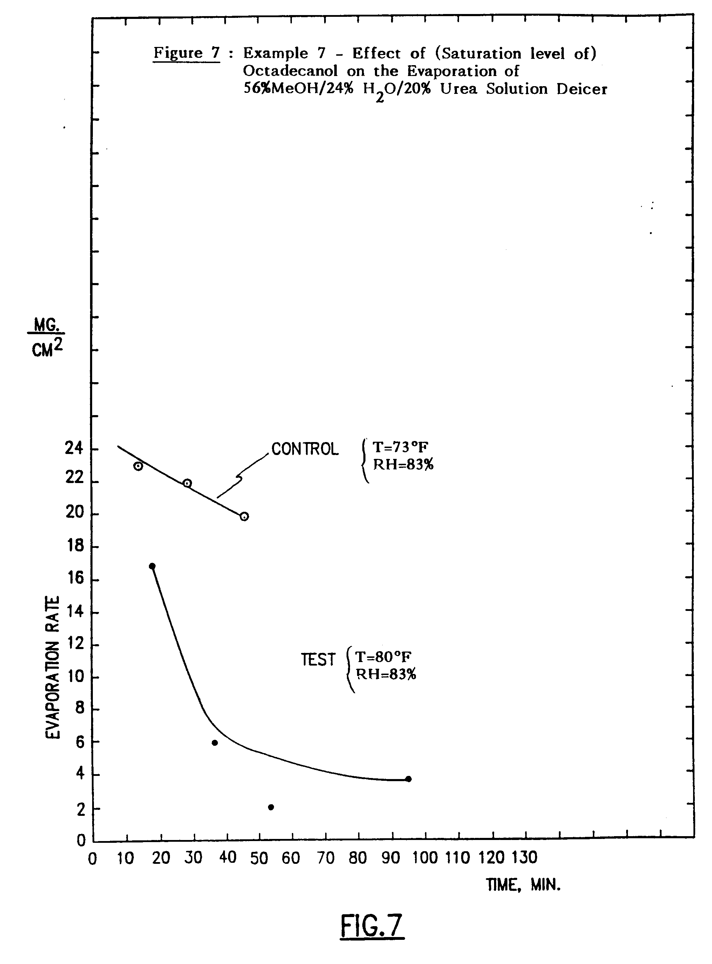

A request for correction to read 'figure 7' instead of 'figure 6' on page 34, line 30 of the originally filed description hasbeen filed pursuant to Rule 88 EPC. A decision on the request will be taken during the proceedings before the Examining Division(Guidelines for Examination in the EPO, A-V, 2.2).

(30) Priority : **14.12.90 US 627696**

(43) Date of publication of application :
**17.06.92 Bulletin 92/25**

(84) Designated Contracting States :
**AT CH DE FR GB IT LI SE**

(71) Applicant : **Gancy, Alan B.**
**8810 Wandering Way**
**Baldwinsville, New York (US)**

(72) Inventor : **Gancy, Alan B.**
**8810 Wandering Way**
**Baldwinsville, New York (US)**

(74) Representative : **Laurent, Michel et al**
**Cabinet LAURENT et CHARRAS, 20, rue Louis Chirpaz B.P. 32**
**F-69131 Ecully Cedex (FR)**

(54) **Novel evaporation-inhibited alcohol-based deicers/anti-icers.**

(57) Methanol, ethanol, and methanol/ethanol deicers are formulated to contain additives which inhibit evaporation of the deicers during application, thereby dramatically reducing evaporative losses. These additives also function to reduce flammability of accidental spills during transportation and handling. The additives consist of long chain aliphatic alcohols which are economical, effective at low concentrations, relatively non-corrosive, and relatively harmless to asphalt and Portland cement concrete pavements.

The inhibiting film which forms at the air/solution interface has been shown to be formed through absorption of atmospheric moisture into the deicer. Films are, surprisingly, formed when the inhibitor is at concentrations far below the equilibrium saturation concentration in the original test solution, at test temperature.

Addition of a controlled amount of water to the inhibited alcohol formulations desirably increases their density or specific gravity, and reduces the concentration of additive required to effectively inhibit evaporation losses of applied deicer. The added water also increases the solubility of added known deicers, e.g. urea in the formulation.

The function of an added deicer or freezing point depressant is to further increase the density or specific gravity of the formulation. Quite unexpectedly, however, it has been discovered that addition of a deicer such as urea to the inhibited methanol dramatically reduces methanol evaporation rate, i.e. reduces it far below the level which would have normally been anticipated through the application of Raoult's Law.

Preferred embodiment deicer formulation of this invention have exhibited virtually zero evaporation rate immediately upon pouring the deicer into shallow test vessels. Both magnetically-stirred and quiescent inhibited test liquids exhibit dramatically reduced evaporation rates. Deicers should therefore be effective on undisturbed and on trafficked roadways.

The novel evaporation-inhibition feature allows for the first time consideration for commercial use of economical alcohols possessing low osmolar weight and desirably low eutectic temperatures in the water/ice system.

EP 0 490 796 A1

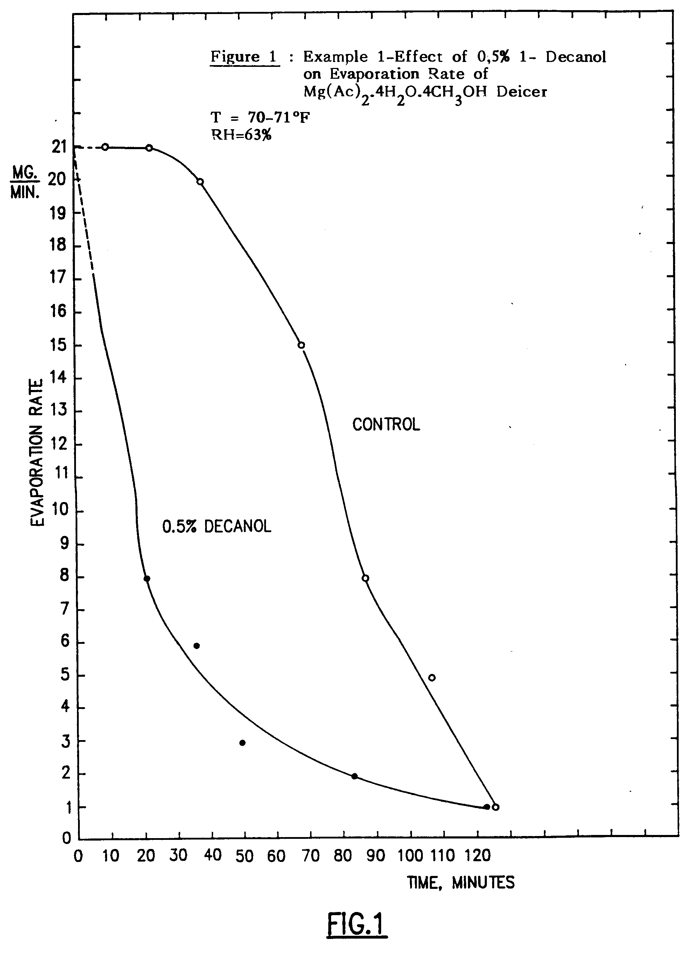

Figure 1 : Example 1-Effect of 0,5% 1- Decanol on Evaporation Rate of $Mg(Ac)_2 \cdot 4H_2O \cdot 4CH_3OH$ Deicer

$T = 70-71°F$
$RH = 63\%$

CONTROL

0.5% DECANOL

MG./MIN.

EVAPORATION RATE

TIME, MINUTES

FIG.1

## Background of the Invention

Currently there is an unsatisfied world demand for a relatively economical, highly effective yet non-corrosive and environmentally acceptable line of deicers/anti-icers for roads, highways and airport runways.

In particular, liquid deicers have never been adopted in the U.S. for treatment of roads and highways. This is not because liquids are inherently more difficult to work with, or less effective in application. Indeed, the European experience points to definite advantages in working with liquids as opposed to solids. The real reason for failing to adopt liquid deicers in the U.S. is ultimately economic. For example, (liquid) ethylene glycol has been tested for road deicing and found to be too expensive, to say nothing of its tendency to create slippery roadway surfaces. Aqueous solutions of sodium chloride (salt) have been found to be uneconomical for a different reason: for every ton of salt, approximately 3 tons of water are required to produce a saturated salt solution. The cost of storage and transportation of such dilute deicer solutions is insupportable. Furthermore, the number of round-trips required during application of salt solution for snow and ice control is prohibitively expensive as compared with the dispensing of solid salt.

The liquid deicers of the subject invention represent for the first time a line of products which are relatively highly effective, inexpensive, non-corrosive, and non-polluting. They are ultimately suitable, in certain embodiments, for airport runway applications which are characterized by rigid technical and safety specifications.

Subject invention is based upon the positive attributes of methanol for deicing -- low cost, low dosage requirement, biodegradability, evaporation from runoff, high heat of solution with water, excellent skid resistance, and an extremely favorable (low) water/methanol eutectic temperature of -125°C. Additionally, it is relatively non-corrosive to metals, and harmless to Portland Cement concrete and asphalt pavement.

The known negative attributes of methanol -- flammability, evaporative loss during application, low specific gravity, and low viscosity -- have been dramatically reduced in this invention by incorporating evaporation inhibitors, and by the addition of known deicers into solution. Water is generally a component of the new deicer liquids, and has the salutory effects of

1.) increasing specific gravity of the deicer liquids,
2.) improving the solubility of non-methanolic deicer components, and
3.) reducing deicer flammability.

However, the fraction of water in the new deicers is never high enough to introduce major negative economic factors, as it did, for example, in the case of aqueous salt solutions which contained at least ~75% water (vide supra).

Methanol-based deicers have never been commercialized worldwide, because of the negative attributes enumerated earlier. The novel concept of successfully and economically incorporating relatively harmless evaporation inhibitors, as taught in the present specification, dramatically alters the opportunities for commercialization of methanol-based deicers.

## Description of Prior Art

In my co-pending U.S. patent application, Serial Number 07/311,986 I have elaborated upon the negative attributes of methanol as a deicer. In that case, I teach that incorporation of magnesium acetate (and water) into methanol dramatically improves upon the properties of methanol, or of aqueous methanol, when used as a deicer. A key feature of that invention is the autonomous formation of a film barrier at the air/deicer interface during application, which dramatically inhibits the evaporation of methanol from those liquids. This has the effect of increasing deicer efficiency (cost effectiveness) through reduction of evaporation losses, and also of reducing deicer flammability. However, I discovered one drawback to such formulations: whereas they are effective under most prevailing weather conditions, insofar as evaporation inhibition goes, they are less effective at very high atmospheric humidity. This fact led to my search for a new approach whereby evaporation inhibition was virtually unaffected by relative humidity and, incidentally, by temperature. Thus, while deicer applications occur at temperatures of 0°C and below, I was intent on developing evaporation inhibition which was effective even at room temperature and above, i.e., storage temperature, in order to reduce liquid flammability at those higher storage and transportation temperatures in the event of an accidental spill.

The prior art in which methanol is a component of multi-component deicer liquids does not teach evaporation inhibition of methanol as an inherent feature of the art. Neither does it imply the incorporation of evaporation inhibitors into deicer solutions containing methanol as a component. Furthermore, prior art deicers containing the ohter volatile alcohols, i.e., ethanol and isopropanol, do not teach, nor do they imply the incorporation of evaporation inhibitors into solution.

As for the internal art development, my initial approach to evaporation inhibition was to add an economical amount of some chemical compound to the deicer solution. This compound, I proposed, should be relatively insoluble in water, and relatively soluble in methanol. Thus, as the deicer/air interface, as methanol preferentially evaporated from the liquid, the interfacial liquid layer would be richer in water (poorer in methanol). Such a condition, if everything were correct, would cause localized precipitation of the added agent at the liquid/ air interface. The precipitated compound might then form a barrier to further methanol evaporation.

Going solely on chemical handbook information, it was postulated that 1-heptanol, a liquid at room temperature, would fulfill the hypothetical additive requirement. It is soluble in alcohol, but has a low solubility in water. Accordingly, 1-heptanol was added to a methanol/magnesium acetate/$H_2O$ deicer of my own prior art, at a level of 0.5%. The quiescent evaporation rates of a control solution were measured side-by-side with the heptanol sample at room temperature. Results showed that heptanol did not aid in the inhibition of methanol evaporation compared to the control; in fact, it impaired the (ultimate) natural tendency of this deicer solution to seal itself off.

A similar evaporation rate experiment was performed at room temperature using 0.5% 1-decanol as the postulated evaporation inhibitor. Only upon long standing did the solution containing decanol begin to evaporate at a rate lower than that of the control.

Similar experiments were performed using 0.25% and 0.5% 1-dodecanol additives. Short-term evaporation rate data showed dodecanol was not the answer to evaporation inhibition, at least not under the test conditions selected.

Similar experiments were performed using 1-tetradecanol as additive, and results were also unsuccessful under the selected test condition, i.e. room temperature and humidity. It seemed that the long-chain aliphatic alcohol approach was not profitable.

However, when 1-hexadecanol additive was tested it showed a palpable reduction in evaporation rate of the methanol-based deicer. Furthermore, upon longer standing, a definite visible, palpable but delicate skin was seen to form at the liquid/air interface. Positive results were also discovered using 1-octadecanol additive. These promising results were unanticipated. In the course of the experimentation it was concluded that the evaporation inhibitor additive must be present at saturation, at the temperature of the evaporation test. (Later exceptions to this rule were discovered, and are discussed under "Preferred Embodiments".) This was also unanticipated, but in retrospect it is reasonable. After all, I had postulated from the very beginning that the additive would have to precipitate at the air/solution interface in order to form an evaporation barrier; it could not reasonably do so unless it were already present at saturation concentration in the bulk solution.

Then in the course of conversations with the major U.S. manufacture of aliphatic alcohols, I learned that 1-hexadecanol had been proposed as an additive to inhibit the evaporation of water from reservoirs. No product is currently being sold for that end-use, however. There were a number of academic studies on the formation of a monomolecular layer of hexadecanol at the air/water interface, and indeed some inhibition of water evaporation is seen. This seems to be a potentially economical scheme inasmuch as the solubility of 1-hexadecanol in water is extremely low. At 24°C, for example, solubility is $3 \times 10^{-6}$% or 0.000003%. Thus, one would add this alcohol to water at a concentration close to the thermodynamic solubility level, and expect some inhibition of evaporation of pond or reservoir water.

But economical use of hexadecanol as a methanol evaporation inhibitor simply did not make sense. After all, the handbook solubility of hexadecanol in methanol at 24°C is 49.24%. My own measurement of 49.14% is in good agreement with the handbook value. Certainly no one would even consider using an additive at the level of 49%! To put it in perspective, the solubility of 1-hexadecanol in methanol is 16 million times that in water at the same temperature! What makes sense in water systems does not make sense in methanol.

It is therefore certainly not obvious to one skilled in the art to use a long chain aliphatic alcohol as a methanol evaporation inhibitor. Yet my experimental evidence says that it was.

Further research uncovered two contributory reasons for the success of hexadecanol in my research. Firstly, I discovered that the system hexadecanol/$H_2O$ exhibits an extremely high temperature coefficient of solubility. In other words, whereas hexadecanol solubility in methanol was 49% at room temperature, it was found to be only 0.97% at -1°C, a temperature at which deicers would have to perform! This result was, to say the least, unanticipated. One does not expect a 50-fold drop in solubility over a 25°C range. This could possibly be explained by the postulation that the equilibrium solid phase at lower temperature is not hexadecanol, but some complex compound of methanol and hexadecanol. However, I do not wish to be held to this conclusion as concerns patentability of my invention.

Secondly, I discovered that addition of relatively small amounts of water to methanol -- at room temperature --dramatically reduces hexadecanol solubility. Whereas room temperature solubility is 49% in pure methanol, I also found that solubility is only 0.98% in a 90% methanol/10% water solution. At this ~1% level, additive requirements are beginning to approach an economic level. (Hexadecanol is roughly a dollar a pound, whereas methanol is about 6 cents a pound in today's market). This finding explains for the first time my experimental evaporation data, where water was always present in the deicer liquids examined.

To summarize, examination of handbook solubility information would have caused one skilled in the art to rule out use of long chain alcohols a methanol evaporation inhibitors, even though they have been proposed for inhibition of reservoir water evaporation. Without (questionable) benefit of this information, I discovered experimentally that these compounds were indeed viable agents for the inhibition of methanol from deicer solutions during end-use.

To follow through with applications to water reservoirs, I found that water saturated with 1-hexadecanol at room temperature afforded only about a one-third drop in the evaporation rate of a water control. As applied to my deicer solutions, meaningful reductions in evaporation rates around an order of magnitude are not uncommon (vide infra). Furthermore, whereas the films over water are not palpable, and are therefore truly monomolecular as described in the literature, the films forming over my deicer solutions are palpable, at least in the later stages of the evaporation process. Hence, I suggest a different mechanism working in water as compared to water/methanol systems. In the latter case, whereas monomolecular films may indeed form when deicer solution is freshly poured into the shallow test vessels, ultimately a hexadecanol "precipitation" at the air/solution is manifest due to the large differential in hexadecanol solubility between water and methanol. In other words, as evaporation of methanol from the deicer solution proceeds, it leaves a relatively water-rich system behind, wherein hexadecanol solubility is relatively much lower. One could argue that a similar "precipitation" takes place as the 100% water system evaporates; water leaves the system, forcing the "excess" hexadecanol to precipitate somewhere. The difference is, however, that in water we are talking about a hexadecanol solubility that is a million-fold less than in the methanol systems under discussion; there is so little additive present to begin with that palpable film formation is unlikely, even after most of the water in the test sample has evaporated.

The postulated difference in the film-formation mechanisms discussed above --water vs. aqueous methanol -- may account for the experimental fact that evaporation inhibition in my deicer systems is roughly 3 times more effective than it is in water. This is significant. Had the reduction in evaporation rate of methanol over my deicer liquids been only one-third compared to a control, as it is for straight water systems, it probably would not be commercially attractive.

Thus, in addition to the unobviousness of the present invention based on solubility information, as expounded above, there is the further unobviousness based upon the fact that inhibition in my deicer systems is sufficiently large to warrant commercialization, a result not predictable from information on straight water systems.

Methanol, as with most other chemical deicer candidates, has its toxic limits. It currently carries a rating of "3 --Mildly Toxic", where a "1" rating would be innocuous a chemical as could be found. Ethylene glycol, now used as an airport runway deicer worldwide, also carries a "3" toxicology rating. The literature indicates that there are certain chemical compounds which function as antidotes in the event of accidental methanol ingestion. Ethyl alcohol is such an antidote. Whereas methanol in itself is not toxic, its oxidation in the body by alcohol dehydrogenase produces the toxic agents, in particular formic acid. Inhibition of this oxidation was almost complete in vitro when the molar ratio of (added) ethanol to methanol was as little as 1/15, or roughly 9 weight per cent. No suggestion is made in the literature, however, that ethanol be incorporated into methanol as a product of commerce. Such a concept is original in the present deicer invention. Thus, as a means of reducing, but not eliminating methanol toxicity, I claim the incorporation into methanol-based deicers an amount of ethanol corresponding to at least 9%, total alcohol basis.

Ethanol is an excellent deicer in its own right. However, taking into account its higher price and higher osmolar weight (than methanol) it currently costs about three times as much to melt a given quantity of ice using ethanol as compared with methanol. If this were not so, one could eliminate methanol entirely from deicer, and use ethanol alone. Indeed, I claim straight ethanol deicers whose evaporation is inhibited by the inhibitor agents which I discovered are effective in methanol systems. The drawback is that these agents are more soluble in ethanol than in methanol, and it will be shown that it is preferable to keep the concentration of evaporation inhibitor as low as possible (vide infra). It must also be remembered that ethanol is not completely innocuous, and it carries a toxicity rating of "2".

Ethylene glycol-based deicers/anti-icers are widely used worldwide. And whereas glycol and methanol share the same toxicology rating of "3", switching from glycol to methanol carries with it a definite benefit to the environment. The reason is that the osmolar weight of methanol is roughly half that of glycol. This means then only about half the amount of "3"-rated chemical goes into the environment when melting a given quantity of ice. Glycol has been used, of course, because it is relatively free of evaporation losses upon application as a deicer. But now that I teach the dramatic reduction in methanol evaporation through use of an evaporation inhibitor, there is for the first time incentive to replace glycol with (inhibited) methanol. There are further reasons for replacing glycol with (inhibited) methanol. To summarize

1.) The current cost of melting a given quantity of ice using methanol is roughly 10% that of using glycol

2. Use of methanol puts only about half the toxic substance into the environment per unit of ice melted, compared to glycol.

3. Glycol has been documented as increasing pavement slipperiness, whereas methanol does not.

4. Glycol gets carried into runoff intact, until later when biodegradation sets in, whereas methanol, much diluted in the runoff, can be at least partially reduced in concentration through evaporation losses. Furthermore, evaporation of methanol from runoff poses no flammability threat.

5. Methanol prices are forecast to fall even lower as production volume increases in response to the demand for methanol-based automotive fuels.

## OBJECTS OF THE INVENTION

One object of the invention is to produce for commerce effective, bio-degradable, relatively non-polluting and non-corrosive deicers/anti-icers based upon low-cost methyl alcohol.

Another object is to produce methanol-based deicers characterized by significantly reduced evaporative losses of methanol during application to ice and snow removal.

Yet another object is to produce methanol-based deicers with significantly reduced flammability upon accidental spillage during storage and transportation.

Another object is to realize liquid methanol-based deicers which have a density greater than 0.917g/ml, to ensure rapid melting of pavement ice and hard pack snow under realistic winter conditions.

It is another object to provide methanol-based deicers/anti-icers which are effective at very low temperatures, e.g. - 40°C and below.

It is a further object to provide deicers which react exothermically with water, snow, and ice so as to accelerate ice-melting upon application.

It is a further object to reduce the toxicity of methanol in methanol-based deicers by incorporation of ethanol into the deicer.

Another object is to employ evaporation inhibitor additives to reduce losses and flammability of ethanolbased deicer.

## SUMMARY OF THE INVENTION

The basic invention is the addition of long-chain aliphatic alcohols to neat methanol to reduce its evaporation rate when it is applied to pavement as a deicer/anti-icer. From this all other embodiments are generated. Proceeding from this base, water can be added to the formulation. This accomplishes several purposes: First, it allows the effective use of lower concentrations of the long-chain alcohol evaporation inhibitors. Secondly, it favorably increases the density of the solution; this is important in quiescent deicing situations (no pedestrian or vehicular traffic) where deicers which are lower in density than that of ice (0.917 g/mL) will tend to sit atop the snow or ice, and delay the deicing action. Thirdly, flammability is reduced. Finally, it sets the stage for addition of other deicers to the formulation, which are more soluble in water than in methanol. Water in itself, of course, is not a deicer, and if it were not for the above-enumerated advantages, it would have to be considered a useless diluent. Still, the objective is to keep water concentration in deicer fluids to a minimum. In other words, the useless diluent aspect must not be allowed to outweigh the benefits of water incorporation.

Furthermore, addition of water to alcohol in the formulation allows ethanol to be considered as an inhibited deicer. The solubility of the long-chain alcohols, I have discovered, is too high in neat ethanol to consider the latter an economical and practical deicer candidate. But with the addition of water to ethanol, the solubility of the evaporation inhibitors falls into a range which can now be considered economical. It follows that aqueous ethanol/methanol mixtures are also viable candidates for evaporation inhibition according to this invention. And, provided the relative concentration of ethanol in neat ethanol/methanol mixtures is not too high, the latter can also be considered candidates for practical, economical evaporation inhibition.

The solubility of the inhibitors of this invention, I have found, is too high in isopropanol and aqueous isopropanol to include the latter in the claims of the present invention. Thus methanol finds a unique niche with regards to its suitability for evaporation inhibition among the alcohols.

Finally, the branching embodiments include the addition of various deicer candidates to inhibited methanol/ethanol, and ethanol deicers. The deicer candidates function by virtue of the their ability to dissolve in water and to depress the normal freezing point of water. These deicers were originally included in order to further increase the density of the formulation of this invention. Deicers such as isopropanol are an exception because they would not increase formulation density, and were originally excluded from the list of added deicer candidate. However, I have discovered an important synergy between the evaporation-inhibiting additive of this invention and the added deicer (vide infra). The result of the combination is a dramatic reduction in evaporation rate, the mechanism of which is not clearly understood. When this added deicer is magnesium acetate, as described in my co-pending application, then evaporation-inhibiting film formation is inherent in the formulation, i.e. without the use of evaporation inhibitors. Now, in the present invention, there are two contributions to evaporation inhibition: the additive, and the inherent nature of the $Mg(Ac)_2/H_2O/CH_3OH$ system.

The added deicer need not be non-corrosive and non-polluting for the purposes of the present patent claims. For example, when the added deicer is sodium chloride, or "salt", then there are at least two overall benefits which accrue:

1.) the limited deicing capability of salt, both in regard to rate, and to low-temperature deicing capability, is boosted by the presence of methanol, and

2. the corrosion, environmental damage due to salt is reduced through simple dilution of the salt with methanol.

The list of viable deicer candidates to be incorporated into inhibited aqueous methanol, or methanol/ethanol, includes

    sodium chloride

    potassium chloride

    magnesium chloride

    calcium chloride

    urea

    sodium acetate

    potassium acetate

    calcium acetate

    magnesium acetate

    calcium/magnesium acetate.

All materials on the list have been variously used or proposed for use as deicers. The sulfates have been out of favor because of their detrimental effect on Portland cement concrete. Nitrates have been discussed but have been generally dismissed as being corrosive to metals. Nonetheless, these materials will be included here for the sake of completeness:

    ammonium, sodium, potassium, and magnesium sulfates

    ammonium, sodium, potassium, and magnesium nitrates.

Ammonium acetate can be added to the list even though ammonium salts are detrimental to concrete, and also produce unwanted ammonia through interaction with concrete.

The list can be further expanded as follows:

    isopropyl alcohol (this will not improve deicer density, however)

    ethylene glycol

    formamide

    tetrapotassium pyrophosphate

    propylene glycol.

The amount of added deicer, excluding the alcohols for the moment, can be arbitrarily determined by setting a solubility standard. For example, it can be stated that only so much urea be added to the methanol, given a certain water concentration in the methanol, such that solids do not precipitate out of the formulation upon long storage at -10°C. As for the added alcohols such as propylene glycol, criteria in addition to the above may be adopted, and they include limitations on the amount of evaporation inhibitor required to saturate the total deicer formulation.

Of course, one criterion which applies to the entire list of candidate deicers is non-technical, i.e. cost. Certainly biodegradability and corrosivity are also important additional factors in the custom-designing of the final deicer formulation.

Mixtures of candidates deicers on the above list may also be used according to this invention.

In summary, the basic invention is the incorporation of evaporation inhibitors into the following:

    neat methanol; neat ethanol

    neat methanol/ethanol mixtures

    aqueous ethanol,

    aqueous methanol, and

    aqueous methanol/ethanol mixtures.

The generalized invention adds another component to the above list, and these materials are drawn from the candidate list which starts with "sodium chloride", etc. The solubility of these added components, except in the case of the alcohols such as ethylene glycol, will be very limited in the neat systems, but will be much more soluble in the aqueous versions.

The incorporation of many of the candidate deicers into methanol or ethanol formulations allows them to be used whereas in their undiluted form they are disadvantageous. For example, solid ammonium acetate is very hygroscopic and is unsuitable for use due to storage and application problems. Aqueous solutions of ammonium acetate are unsuitable and undesirable due to the high concentration of diluent water present. But when the solvent is aqueous methanol, or ethanol, a viable formulation emerges. As stated earlier, sodium chloride as a saturated aqueous solution is undesirable for all the high fraction of water contained therein. But sodium chloride dissolved in aqueous methanol or ethanol now becomes viable. For the first time an economical sodium chloride in liquid formulation now becomes available.

## PREFERRED EMBODIMENTS

### A. Inhibitor Concentration

The present invention becomes practical only when the concentration of evaporation inhibitor is very low; I have been able to achieve good results with hexadecanol concentrations as low as 200 ppm in the deicer formulation. There are three basic reasons for the restriction on inhibitor concentration:

1.) economy

2.) precipitation of the inhibitor at low temperature, and

3.) damage to asphaltic pavement surfaces caused by the inhibitor.

Whereas economy is important, it is not the most important of the three. The precipitation problem arises whenever deicer solution is formulated such that the system is saturated with inhibitor at, say 0°C, and then the storage temperature drops below 0°C. This can be prevented, of course, with heated storage, but such arrangements will normally add expense. The best solution to the problem is to ensure that the saturation concentration at 0°C is so low that the precipitation caused by a fall in storage temperature is so small in terms if weight and volume that it does not impair the future usefulness of the stored deicer. I have seen situations for example, where the liquid completely freezes up to form an immobile (wet) solid. But at levels of around 200 ppm, very little solids come out of solution with a 10°C drop in temperature, for example. Furthermore, these solids do not tend to cake, rather they are almost gelatinous. Also, the density of solid hexadecanol at these temperatures can be very close to that of the mother solution, around 0.8 g/mL. This makes it easy to redisperse these solids with gentle agitation, until the temperature rises again to saturation temperature, say 0°C, where all the solids re-dissolve. Ideally, hexadecanol density would always be exactly equal to solution density, in which case no agitation would be required. Solution density can be varied by varying the proportions of alcohol, water and deicer. The density of hexadecanol, of course, is fixed at any given temperature. The "ideal" inhibitor would exhibit a temperature coefficient of solubility of zero over the entire range of use temperature.

Thus, even if a 1% saturated concentration level of hexadecanol in a given deicer formulation were adjudged to be economical, it would most likely not be acceptable in terms of precipitation in storage. Note that precipitation after application to icy pavement will never be a problem.

Perhaps the most important reason for a low inhibitor concentration, ceteris parabus, is the potential for damage to pavement surfaces. Oleophilic substances in general, oil, gas, etc., are known to damage asphalt pavement surfaces. Hexadecanol, on any hydrophilic/hydrophobic balance scale, would have to be considered oleophilic. Thus it is very important to keep its concentration as low as possible in any formulation which is going to be applied to asphaltic airport runway and road surfaces. When deicer solution is applied to pavement, in general it will be diluted with melted ice. This would tend to promote precipitation of inhibitor. If the density of the inhibitor exceeds that of the aqueous system, which is highly unlikely, the inhibitor would sink, and impinge against pavement surfaces. If, as is more likely, the inhibitor floats, then its adherence to pavement is less likely. The inhibitor will be carried away with the runoff, to gutters, sewers, and drainage areas, where it can do no harm.

Inevitably, at times the saturated (with inhibitor) aqueous solutions will dry through evaporation onto roadway surfaces. However, the solubility of inhibitor is so dramatically low in water-rich systems (it is of the order of $10^{-6}$% in pure water) that the amount of inhibitor so deposited will be too low to be a problem. Furthermore, what inhibitor that does deposit is to some degree dispersed by the vehicular traffic. Also, the fact that hexadecanol is a solid renders it less harmful than gasoline or oil as concerns asphalt damage.

Oleophilic materials are not detrimental to Portland cement concrete pavement surfaces, on the other hand. On the positive side, one might postulate that continued deposition of traces of hexadecanol onto such surface -- and especially in the pores of the cement -- may desirably reduce the adhesion of ice to such surfaces, without reducing vehicle tire skid resistance (such as is the case with rubber-based pavement paints).

Therefore the preferred embodiment insofar as inhibitor concentration in the deicer formulation goes, is very low levels of, say 100-10,000 ppm.

## B. Inhibitor Type

The primary (unbranched) aliphatic alcohols would seem the most favorable inhibitor candidates for a variety of reasons. Firstly, they are relatively inexpensive at 1$/lb., compared to some of the more exotic chemicals such as the fluorinated hydrocarbons. Secondly, research shows that for inhibition of water evaporation, the unbranched alcohols work best due to the closeness of molecualar packing possible so as to form a coherent (monomolecular) film. Thirdly, the hydroxyl group of the alcohols, though very slightly acidic, is in practical terms a neutral and relatively unreactive functional group. Hence it should not be a problem in terms of metal corrosion. Finally, the long chain alcohols are relatively non-toxic, and some carry an "irritant" rating. As pointed out earlier, a problem -- if ever there is one of any magnitude -- would be due to the hydrocarbon chain of the alcohol, or its oleophilicity, and not to the hydroxyl functional group. After all, water is also a hydroxyl compound.

The chain length of the primary alcohols is the next factor to consider. My research shows that the low molecular weight alcohols are not favored in this application, probably because of their higher solubility in water, and in methanol, which would mean a much higher, impractical end use concentration in deicer formulations. Furthermore, the fact that short-chain alcohols are liquids instead of solids at end use temperatures may also rule them out. Hexadecanol seems to be an optimum choice, even though I have shown octadecanol to be an excellent inhibitor in this application. It would seem that moving to the higher molecular weight alcohols would not palpably reduce solubility in water/methanol solutions --it is already so low. So there is not much to be gained there. There may even be a detriment, inasmuch as the higher alcohols would have to be undesirably higher on the oleophilicity scale.

However, even 1-decanol seems to provide some benefit, even at room temperature. So the range to be claimed would be $C_{10}$ to $C_{20}$, with the preferred embodiment of $C_{14}$-$C_{18}$.

Purity of the long chain alcohols as obtained from the present-day manufactures for ~1$/lb. is quite adequate to this application. A typical technical grade purity would be 98%. The impurities would include both higher and lower alcohols, and would therefore not create a problem in applicability, nor in toxicity.

The molecular weights of the alcohols, as they vary with chain length, do not present a major problem, even though theoretically a higher dose level of a longer-chain alcohol would be required to do a given job ceteris parabus.

## C. Selection of Inhibitor Concentration, or Dose Level

The effective concentration of inhibitor is that representing at least saturation at the projected temperature of application. (vide infra for exception) For deicers the highest application temperature to be encountered is virtually 0°C. Therefore deicer formulations must contain at least the concentration of inhibitor which represents saturation at 0°C. Higher levels than this may be used, but would represent an uneconomical waste of inhibitor.

On the other hand, if the additional function of inhibitors is to reduce flammability due to accidental spillage during storage, transport, and handling, then a higher concentration of inhibitor will be required. The level can be arbitrarily set as being saturated at any reasonable desired temperature, e.g., 25°C.

It should be pointed out that some evaporation protection is afforded even at temperatures higher than that at which the deicer solution was saturated with inhibitor. For example, if a spill occurred at an atmospheric temperature of 24°C., even though the deicer formulation was saturated with inhibitor at 20°C., two factors conspire to inhibit evaporation:

1.) as soon as some methanol evaporates from a spill, the inhibitor becomes more concentrated in the residual liquor and eventually reaches saturation at 24°C when it then becomes an effective inhibitor, and

2.) self-cooling of the spill/air interface due to evaporation of methanol creates a temperature there which is lower than ambient; this favors evaporation inhibition.

## D. Method of Deicer Formulation

In general the present invention requires saturation of the deicer liquid with the inhibitor, although exceptions to this will be elaborated. The best means of achieving saturation is to first dissolve the inhibitor completely in the methanol, or ethanol/methanol if the ethanol raw material is available in anhydrous form. The alcoholic solution so formed is then blended with the aqueous phase which may or may not contain dissolved deicer, e.g., urea.

In the event that neither the methanol nor the ethanol raw material is available in anhydrous form, then the inhibitor is first dissolved in one of the aqueous alcohols with the assistance of a little heat. Other components can then be added, as above.

### E. Water-To-Alcohol Ratio

In the case of anhydrous methanol, the amount of hexadecanol required for saturating the liquid may be prohibitive from a practical standpoint, as discussed earlier, let alone from an economic standpoint. Evaporation inhibiting is ultimately achieved in this event, I have discovered, even when the system is unsaturated with respect to hexadecanol. Thus if a solution of ~1% hexadecanol in essentially anhydrous methanol is exposed to room temperature and humidity conditions, approximately half of the methanol freely evaporates. Then a palpable film suddenly appears at the air/liquid interface and evaporation ceases thereafter.

In the same way, if a ~2% solution of hexadecanol is allowed to stand, roughly half of the methanol evaporates, and then the inhibiting film forms.

If such experiments are carried out in a sealed container containing a liberal amount of $CaSO_4$ drying agent, no film forms over anhydrous methanol, and the liquid evaporates completely leaving a hexadecanol residue. If the identical experiment is done with a water reservoir replacing the $CaSO_4$, the inhibiting film forms at the point where half of the original methanol has evaporated. Incidentally, methanol is now found in the water reservoir.

Thus, it is clear that an anhydrous methanol system can benefit from the incorporation of evaporation inhibitor, where the latter is present well below its saturation level. The inhibiting film forms only over time, after a significant quantity of methanol has already evaporated, and in the presence of atmospheric moisture. The atmospheric moisture is absorbed into the anhydrous methanolic solution of hexadecanol. This is a totally unanticipated result.

The films so-formed are unique in that the rate of methanol evaporation subsequent to film formation is virtually zero. By contrast, the reduction in rate through use of an inhibitor is roughly an order of magnitude in (initially) aqueous methanol systems, where inhibition begins virtually when the liquid is poured into the shallow test vessel. It should be evident that film formation through absorption of atmospheric water will also apply to inhibited aqueous methanol systems.

The lower limit to water concentration, or water-to alcohol ratio, is therefore zero in terms of operability of the invention, even though evaporation inhibition doesn't proceed immediately upon application of anhydrous deicer. Such inhibition will ultimately always occur inasmuch as the atmosphere always contains moisture.

As the water concentration in the deicer formulation increases from zero, the evaporation inhibition improves monotonically, until it is immediate upon the deicer application at a concentration of 20%, or a water/alcohol composition of 20%/80%. Such solutions are ideal as deicers in that they are significantly denser than neat methanol, and they readily dissolve deicers such as urea which further builds up density. Also, the level of water, when considered as a non-functional diluent, is not excessively high.

The upper limit of water concentration is more arbitrary than the lower, 0%, limit. An examination of the water/methanol freezing point curve indicates clearly that a 20% methanol/80% water solution can be useful as a deicer or an anti-icer. This is where the upper limit of water relative to alcohol/water will be set in the present invention --80%.

The operable range is therefore 0%-80% water in water/alcohol terms, i.e., without consideration of added deicers such as sodium chloride. In broad terms, "alcohol" refers to any blend of methanol/ethanol as defined below.

The following table shows the amount of methanol evaporation found to occur before the onset of a palpable film barrier, as a function of hexadecanol concentration in absolute methanol. Experiments were performed at room temperature and humidity. The initial depth of solution was about 7mm. Results are rounded.

| % Inhibitor, Initial | % MeOH Loss Prior to Film Formation |
|:---:|:---:|
| 0.1 | 78 |
| 0.5 | 67 |
| 1 | 50 |
| 2 | 50 |

However, when the initial solution depth was 3mm, the 1% inhibitor solution lost 62% of it methanol prior to film formation (as opposed to 50%, above). This indicates clearly that absorption of water vapor from the atmosphere to form a film is a complex function including the time of exposure to atmospheric air as a variable.

The foregoing results clearly indicate that the bulk concentration of inhibitor need not be at thermodynamic saturation in order for an evaporation-inhibiting film to form under quiescent conditions. Recall that the bulk saturation concentration at room temperature is 49%, very much higher than those used in the experiments reported in the above table.

Thus, for more immediate film formation upon application, the methanol or methanol/ethanol solution should contain some water, and the concentration of inhibitor used should be at (bulk) saturation, at the temperature of application. But for less immediate film formation in atmospheric air, the alcohol may be anhydrous, and the concentration of inhibitor used may be far below saturation.

## F. Methanol/Ethanol Concentration Range

Where ethanol is blended with methanol as an aid in reducing toxicity the lower ethanol boundary is preferred at 10% relative to the methanol/ethanol components, anhydrous basis. The upper boundary will be set at 100% ethanol, in spite of the fact that the cost of deicing with ethanol is about three times that of using methanol. It is not the purpose of this invention to anticipate cost-effectiveness breakeven compositions. Thus, inhibited absolute ethanol is a claimed composition. Overall, the claimed ranges, anhydrous basis, are

Methanol 0% - 100%

Ethanol 100% - 0%.

As the ethanol fraction increases, so will cost. Also, the solubility of inhibitor increases, and this is undesirable. For example, I have found the solubility of hexadecanol in 70% EtOH/30% $H_2O$ to be 1.28%, whereas in 70% MeOH/30% $H_2O$ is only ~0.03%, at room temperature.

One advantage of the use of EtoH is that it is well know for its tendency, in absolute form, to pick up moisture from the air. This can only enhance inhibitor film formation. Where EtOH is the component of an aqueous deicer system, and there is more than 5% water relative to EtOH/$H_2O$ solution, then this water-attracting ability of ETOH will not be a factor.

## G. Deicer Components

The basic invention is inhibited methanol/ethanol deicers. Whereas these are perfectly functional and operable liquids, it is preferably that deicer liquids posses higher densities. One density target is 0.917 g/mL, the density of ice. Another is 1.00 g/mL, the maximum density of water. The invention therefore encompasses incorporation of various known deicers, as listed in the previous section. Additions may be small, and proceed up to some arbitrary limit based upon room temperature solubility, or some lower temperature solubility in the event that storage temperatures happen at times to be low. For example, I have arbitrarily set -10°C as a temperature limit of solubility; if liquids stored at this temperature until equilibrium is reached exhibit a precipitation of solids, then they do not pass the arbitrary test. A concrete example will serve to illustrate: I prepared a solution having the composition

60% MeOH

20% $H_2O$

20% urea,

which was clear and stable at room temperature. At -10°C, however, there was some small amount or urea precipitated. I therefore shifted the composition to

55% MeOH

25% $H_2O$

20% urea.

This solution remained clear at -10°C, and was selected for further study. There is nothing sacrosanct about the -10°C criterion, and I do not wish the claims to be limited to such arbitrary, albeit practical criterion. This is especially so if heated storage is available. Also, strictly speaking, the invention should not be limited to clear liquids, but should extend to slurries which are, after all, sprayable.

Water need not be a constituent of urea system because urea is somewhat soluble in anhydrous alcohol. For example, the solubility of urea in methanol is about 5% at -10°C. However, the addition of water brings about three desirable outcomes. It helps to increase deicer solution density, and it allows for the incorporation of more solute urea, as in the above enumerated systems. Also, it allows for use of lower concentrations of inhibitor, a desirable goal. Hence urea/water/methanol is preferable to urea/methanol. Also, urea/water/methanol is preferable to urea/water/ethanol, at least for reasons of cost.

The urea system can be generalized. Thus, the invention can be defined as a liquid or slurry containing inhibited alcohol, water, and X, where X represents any one of a number of deicers enumerated in an earlier section. When X is a chloride, then freedom from metallic corrosion is not possible, unless a truly effective corrosion inhibitor can be incorporated into the deicer. The advantage of using, for example, sodium chloride in the system NaCl/inhibited alcohol/water is that salt is cheap. And, because salt is effectively "diluted" with alcohol deicer, this system puts less salt into the environment, and in that sense is therefore less corrosive. As earlier stated, this is also an effective means of achieving a liquid form of salt deicer. Finally, the deicing capability of salt is given a strong boost by the presence of alcohol.

When $\underline{X}$ is an acetate, the deicer will be much less corrosive to metals. Acetates are considerably more expensive than salt, however. In any event the cost of the more expensive $\underline{X}$ candidates is always somewhat offset by the lower cost of the alcohol components. $Mg(Ac)_2$ is a good candidate, as is KAc which possesses a desirably higher density. KAc, however, is much more expensive than $Mg(AC)_2$.

Urea is a good candidate for $\underline{X}$ because it is relatively cheap at an average current price of 7 cents/lb. When uncontaminated with thermal decomposition products, it is relatively non-corrosive to metals. It is also harmless to Portland cement concrete. Urea is also ubiquitous worldwide, so that shipping costs are low. It is not a particularly good deicer, with a water/urea eutectic temperature of only -8°C. However, in combination with alcohol its deicing capability is considerably boosted.

Formamide has many favorable deicer characteristics, and is good $\underline{X}$ candidate, as is tetra potassium pyrophosphate. Ethylene and propylene glycol can boost the density of the methanol/ethanol system, but of course will also boost its price. The invention is not limited to the enumerated deicers which have been considered as good $\underline{X}$ candidates, however.

Some $\underline{X}$ candidates are preferably added to inhibited alcohol as-is, e.g., sodium chloride, because this is the most economical way of doing it. Others may be beneficially formed in situ in the alcoholic medium. Some candidates can only be added in this matter, as illustrated in the case of $Mg(Ac)_2$. The "monohydrate" of $Mg(Ac)_2$ is readily formed in situ according to the following:

$$MgO + 2HAc \rightarrow Mg(Ac)2 + H_2O.$$

To form the "monohydrate" by drying the article of commerce, $Mg(Ac)_2.4H_2O$, will not be feasible due to severe hydrolysis upon heating. Such in situ formations will be therefore especially valuable whenever one wishes to limit the amount of water entering into the deicing formulation Limiting the water component can also limit the solubility of $\underline{X}$ in the final deicer formulation: $Mg(Ac)2.4H_2O$ will be more soluble in alcohol than "$Mg(Ac)_2.H_2O$".

But even when the objective is not particularly to limit the water content of the deicer, it is sometimes more economical to pursue the in situ alternative. For example, it is far less costly to form $Mg(Ac)_2$ "decahydrate" in situ according to

$$MgO + 2\ HAc + 9\ H_2O \rightarrow Mg(Ac)_2 + 10\ H_2O,$$

than it is to purchase $Mg(Ac)_2.4H_2O$ and then dilute it with water. The inevitable insoluble residues resulting from the impurities in MgO can be readily settled out, and/or the final deicing formulation may be filtered prior to storage. Because these residues are harmless and present at low levels, it is really not mandatory that they be removed at all prior to deicer application.

## H. Salting-Out Effect

I have unexpectedly discovered an additional benefit of adding certain $\underline{X}$ agents to my deicer formulations, i.e., in addition to the density-increase function. It is a salting-out phenomenon whereby addition of $\underline{X}$ in effect depresses the solubility of hexadecanol in aqueous alcohol. The practical result of this phenomenon is that less hexadecanol is then required to fulfill the film-forming function. This is a highly beneficial result, as will be evident from the foregoing discussion of inhibitor levels. A description of the salting-out discovery is as follows: I prepared three test solutions,

A. Anhydrous MeOH containing ~1% hexadecanol

B. Anhydrous MeOH containing 5.6% $Mg(Ac)_2.H_2O$

C. Same as "B", but also containing ~1% hexadecanol

All three solutions were allowed to evaporate from shallow vessels at room temperature and humidity. Results are as follows:

A. Formed delicate film at air/water interface, with decided drop in evaporation rate. Small amount of white gelatinous solids are also observed at bottom of bulk solution, i.e, two solids were formed --film, and with bulk solids.

B. Evaporated freely to dryness, with no evaporation inhibition. Solution clear throughout, and residue is a clear glass.

C. Evaporation rate as function of time is practically identical to "A". But copious solids are found in bulk solution. As in "A", two types of solids are formed --the film, and bulk solids, but in this case the bulk solids are very much more in abundance.

The above experiment was repeated, with identical results. It is clear that the presence of $Mg(Ac)_2.H_2O$ caused a salting-out of some of the hexadecanol. But the latter, now at a new saturation level, was still able to do the identical job of evaporation inhibition.

An independent experiment was performed in which the amount of water corresponding to Mg(Ac)$_2$.H$_2$O only was present, along with hexadecanol, no Mg(Ac)$_2$ was present. This was designed to determined whether it was the water, and not the Mg(Ac)$_2$, which was responsible for the salting-out effect. Results proved that it was indeed the Mg(Ac)$_2$, and not the water which caused the salting-out.

Normally, salting-out (or salting-in) is a phenomenon associated with 3-component systems, where the salting-out agent comprises the third component. Such is the case with methanol, or hexadecanol and a salt such as NaCl or Mg(Ac)$_2$. In the present invention it is found to apply to the preferred embodiment 4-component systems alcohol, water, inhibitor, and X.

1. Quiescent vs. Agitated Solutions

Most of the experimental proofs of the present invention have been of the quiescent mode. Deicer solution is poured into a shallow vessel, and the weight change is continuously recorded on the undisturbed sample. However, some work has been done with magnetically stirred deicer solutions in shallow vessels. The Examples show that, whereas evaporation inhibition is not as effective as with quiescent samples, there is still a surprising degree of inhibition with the agitated samples. Also, when the stirring is interrupted, the interfacial film quickly "heals" itself, and inhibition characteristics of quiescent puddles is restored.

In reality there are times when applied deicers/anti-icers must act quiescently, e.g. when applied in the early morning hours before the onset of traffic. Or on airport runways, when agents are applied just prior to a storm. There are other times when vehicular traffic interrupts the quiescent state. Experimental results indicate that evaporation inhibition will be more or less effective in the present invention, depending upon the degree of agitation of treated pavement surfaces.

J. Summary

I have unexpectedly discovered that the rate of evaporation of applied anhydrous methanol deicer can be inhibited even when the concentration of inhibiting agent, hexadecanol, is far below its equilibrium saturation concentration. This inhibition does not occur in dry atmosphere, but only in normal room humidity. Hence, the inevitable conclusion that the methanol/hexadecanol system absorbs water from the atmosphere to form an inhibiting film at the air/solution interface. This may be the first reported incidence of an autonomous raising of the so-called consolute temperature.

When water is deliberately added to the inhibited methanol system, inhibition occurs much earlier after application. Eventually a water level in the deicer formulation is reached where methanol evaporation inhibition occurs essentially immediately upon application of the deicer. Water brings the twin benefits of increased deicer density, and much reduced inhibitor solubility so that inhibitor requirement is favorably lowered.

When another deicer such as NaCl or Mg(Ac)$_2$ is added to the inhibited alcohol, deicer density is desirably further increased. Furthermore inhibitor requirement is reduced even more through a salting-out of the inhibitor by the added deicer agents. This was an unexpected benefit. The presence of a non-volatile agent such as Mg(Ac)$_2$ assures that deicing will continue in the extremely unlikely event that all the alcohol is lost through evaporation.

Some or all of the methanol can be replaced by ethanol. To the extent that ethanol replaces methanol, the toxicity of the deicer will be reduced. But this reduction is not merely through dilution of the methanol; it occurs because ethanol has been discovered to be an antidote for methanol poisoning in humans, but ethanol is much more expensive than methanol so a cost-effective trade-off will always have to be made. A further trade-off must be made with the recognition that inhibitors will be (undesirably) much more soluble in ethanol than in methanol.

Whereas most of the proofs of this invention have been made with quiescent systems, it has been demonstrated that evaporation inhibition is effective even for stirred deicer systems. Significant is the finding that interruption of stirring is followed by rapid restoration of the (greater) inhibiting effect in quiescent systems.

Added deicing agents can be incorporated as-is, e.g. sodium chloride. In other instance, the added agents can more economically be incorporated through in situ chemical reaction within the alcohol medium. Such in situ reactions can bring about the added benefit of reduced water introduction, whenever that is considered a preferred outcome.

Inhibitor agents are long chain primary aliphatic alcohols, with carbon chain lengths of 10 to 20, preferably 14 to 18. Their required concentration in the deicer formulation can vary from 100 to 10,000 ppm, depending upon the particular make-up of those solutions (water content, ethanol content, added deicer content). But the lower the concentration the better, not only in terms of economy, but also in terms of

1.) precipitation of inhibitor during low temperature storage, transportation;

2.) the potential adverse effect of the oleophilic inhibitor on asphalt pavement.

With regards to the detrimental effect of inhibitor on asphalt pavement, the amount of inhibitor released through deicing will be infinitesimally small compared with the amount of gasoline and oil spillage onto roadway surfaces from automotive traffic.

The preferred embodiment deicer will contain water, perhaps up to 25% on an alcohol/water basis. It will also contain an added deicing agent such as urea. Its preferred inhibitor level will be 250 ppm or less. The preferred inhibitor will be hexadecanol.

The interaction between the inhibiting agent, e.g., hexadecanol, and the added salt or deicer, e.g. $Mg(Ac)_2$, can be considered an unexpected and synergistic one. Whereas the salt was initially added with the notion of desirably increasing deicer density, the salting-out effect of the salt upon the inhibitor was an unanticipated result. The synergy can be understood as follows: The salt alone, when added to aqueous alcohol, does nothing more than increase deicer solution density, but does nothing for evaporation inhibition (except to the degree any dilution with a non-volatile added salt would reduce methanol vapor pressure according to Raoult's Law). The inhibitor alone, when added to aqueous methanol, will be effective as a methanol evaporation inhibitor, but that effectiveness is a critical function of its concentration; the higher its concentration ceteris parabus, the better it will function as an inhibitor, until saturation concentration is reached. The presence of the added salt in effect reduces the concentration of inhibitor required to do a given evaporation inhibition job. Hence, the synergy between inhibitor and added salt or deicing agent.

It is not entirely clear, however, that the dramatic drop in methanol evaporation rate which results from addition of freezing point depressant (such as urea) to inhibited methanol is necessarily explained by the above solubility considerations. Perhaps it is best just to state the facts for the purpose of patent application, and not to attempt a theoretical explanation; addition of freezing point depressants dramatically reduces methanol evaporation rate of inhibited methanol. This is an entirely unexpected and unobvious phenomenon. It is a synergy whose scientific explanation has yet to be made. The drop in rate is far greater than can be explained by application of Raoult's Law.

## EXAMPLES

EXAMPLE 1 - Effect of 0.5% Decanol on Evaporation Rate of
$$Mg(Ac)_2.4H_2O.4CH_3OH$$
Figure 1 shows that decanol has a definite depressing effect upon the evaporation rate of the magnesium acetate/methanol deicer solution. The largest depression in rate, compared to a control, occurs about one hour after the samples were each poured into shallow dishes of the same diameter.

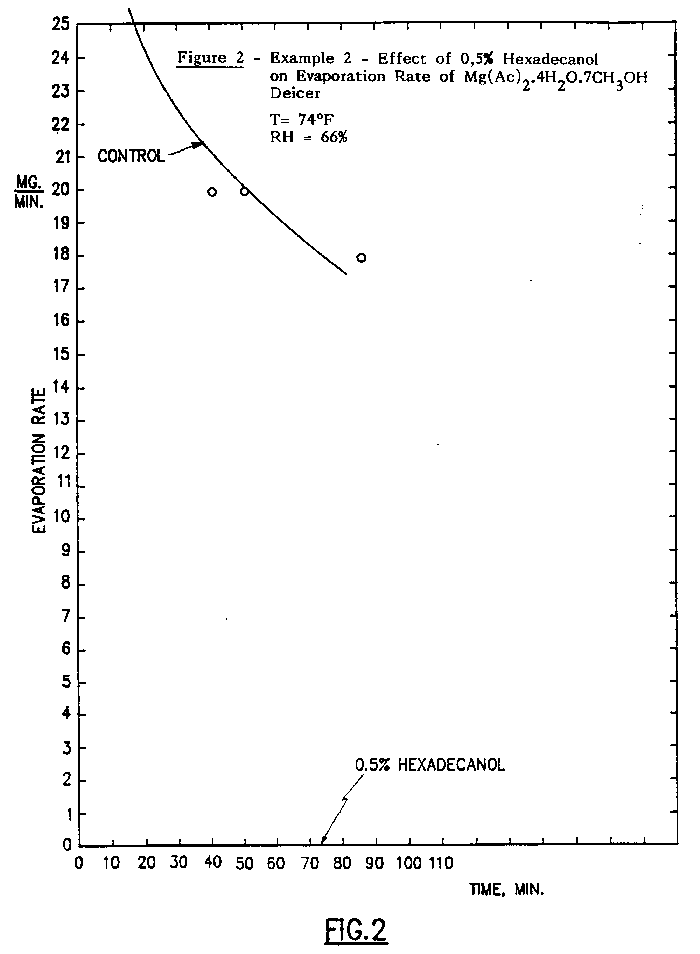

Example 2 - Effect of 0.5% Hexadecanol on Evaporation Rate of
$$Mg(Ac)_2.4H_20.7CH_3OH$$
Figure 2 shows the dramatic inhibiting effect of hexadecanol. The inhibited sample exhibited no evaporation, virtually from the time the sample solution was poured into the shallow dish. This is reflected in the heavy line drawn on the abscissa. The control sample started out at 0-8 minutes with a rate of 40 mg/min., which is off the curve.

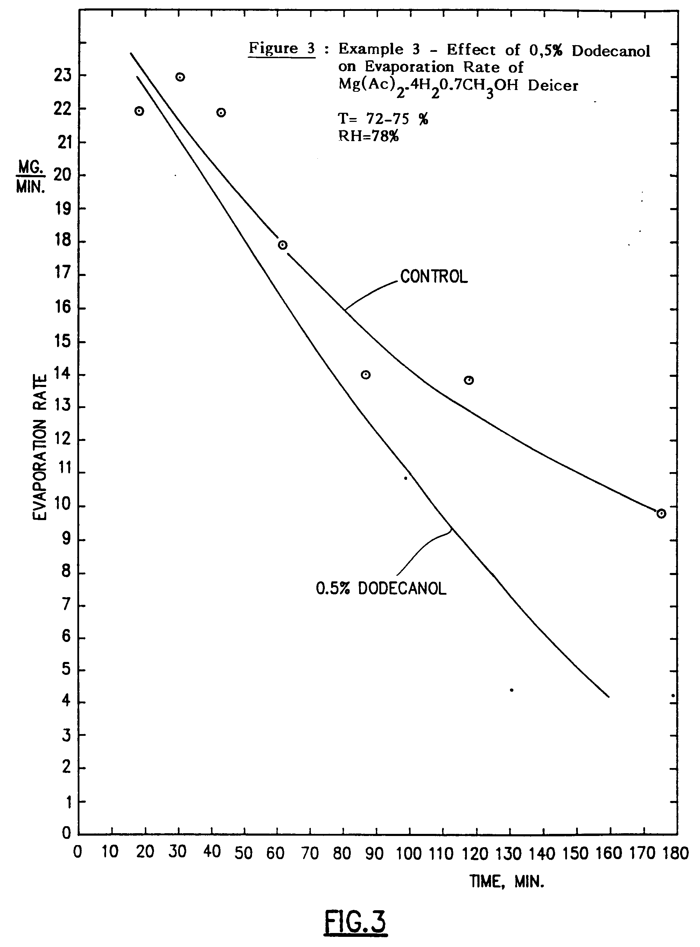

Example 3 - Effect of 0.5% Dodecanol on Evaporation Rate of
$$Mg(Ac)_2.4H_2O.7H_2O$$
As time progresses in the evaporation process, the sample containing dodecanol evaporates more slowly than the control, as seen in Fig. 3.

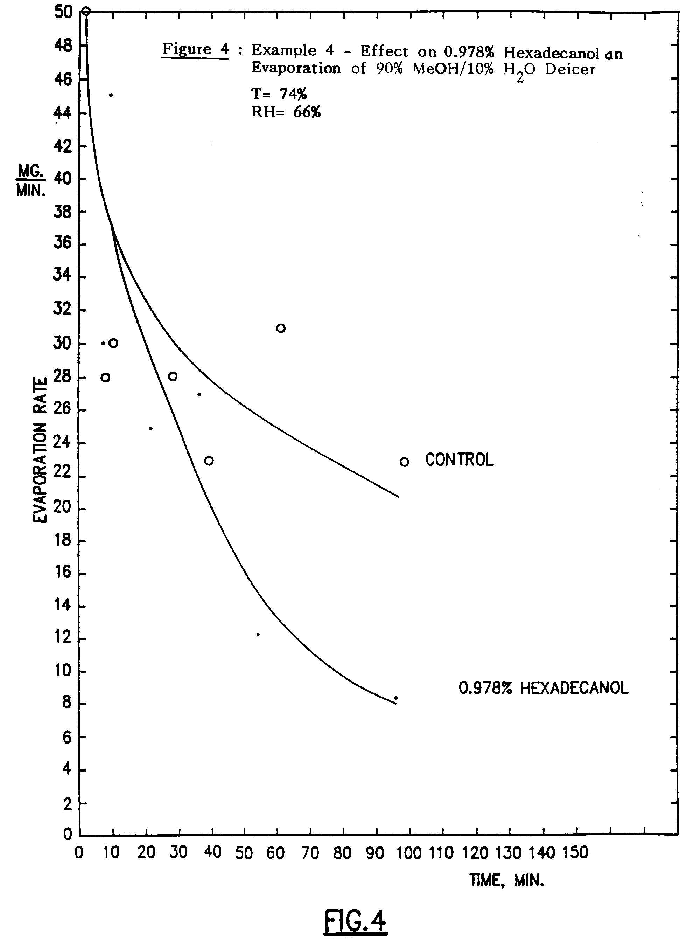

Example 4 - Effect of 0.978% Hexadecanol in Evaporation Rate of
$$90\% \text{ MeOH}/10\% \text{ H}_2\text{O}$$
Hexadecanol definitely suppresses the rate of evaporation of 90% $CH_3OH$/10% $H_2O$, but only in later stages of the evaporation process, as seen in Figure 4.

Example 5 - The effect of 0.15% Hexadecanol on the Evaporation Rate of 55% MeOH/20% Urea/25% $H_2O$. Also, illustrates the effect of intermediate stirring of otherwise quiescent test sample.

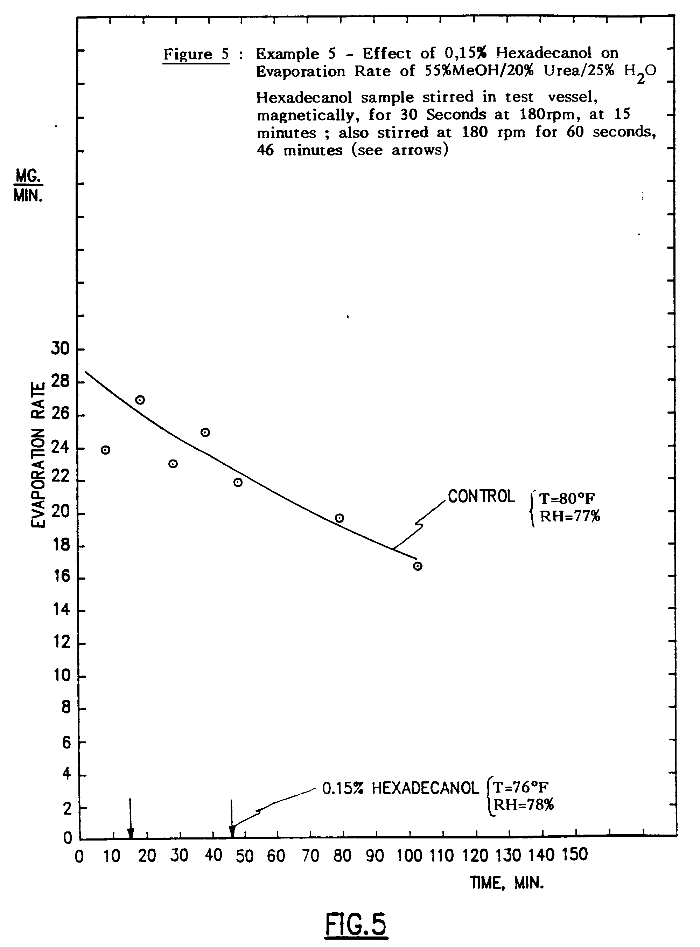

Figure 5 shows the dramatic drop in evaporation rate brought about by the addition of only 0.15% hexadecanol to the solution. This level exceeds the equilibrium saturation concentration at room temperature, as evidenced by the solids present in the formulation containing hexadecanol; the control solution is clear. The rate for the hexadecanol sample is the heavy line on the abscissa.

Note that intermittent stirring does not effect the rate of evaporation of the inhibited sample.

Example 6 - A solution was made up of the composition 55% methanol/25% water/20% urea, containing 0.025% 1-hexadecanol. This is a very slightly turbid solution at room temperature. A companion solution was synthesized having the same methanol/water composition, but without the urea, i.e., it was a 68.75% methanol/31.25% water solution, also containing 0.025% 1 - hexadecanol. This solution was clear.

Evaporation rates were measured for both solutions under almost identical atmospheric conditions. Results are shown in Fig. 6. The measured rate for the urea system is given. Just above it is drawn a theoretical curve corresponding to the rate to be expected upon removal of the urea from solution, according to Raoult's Law. The actual measured rate of the urea-less system is found to be far above the theoretical one. This illustrates the unexpected synergy between inhibitor and added freezing point depressant, in this case, urea. That is, addition of the freezing point depressant dramatically improves the evaporation-inhibition action of hexadecanol. The reason for this synergy is not understood.

The bizarre shape of the urea-curve is explained as follows: The initial rate is essentially zero. Then solution is observed to creep up along the vertical inner walls of the shallow glass dish unit it reaches the rim. It then wets the ground-glass rim surface. While this is happening the effective surface area for evaporation is increasing. Hence, the rise in the rate curve, starting after 15 minutes. Then urea crystals appear on the walls, and rim. These crystals, formed by drying of the solution, then appear to effectively block further creeping. The measured evaporation rate correspondingly gradually drops back down to essentially zero. Such creeping was not observed with the urea-less system. Presumably for a larger-diameter test vessel this "edge effect" would be relatively less important.

Example 7 - Effect of Octadecanol as an Evaporation Inhibitor

A solution of 20% urea was formulated, where the solvent was 70% methanol/30% water. One sample was tested as a control. A companion sample was saturated with octadecanol at room temperature, and then tested. Results are shown in Figure 6. It is apparent that the 18 carbon atom normal-alcohol is also a good evaporation inhibitor in methanol-based deicer formulations.

Example 8 - Effect of (saturated) 1-hexadecanol on the Evaporation Rate of Distilled Water

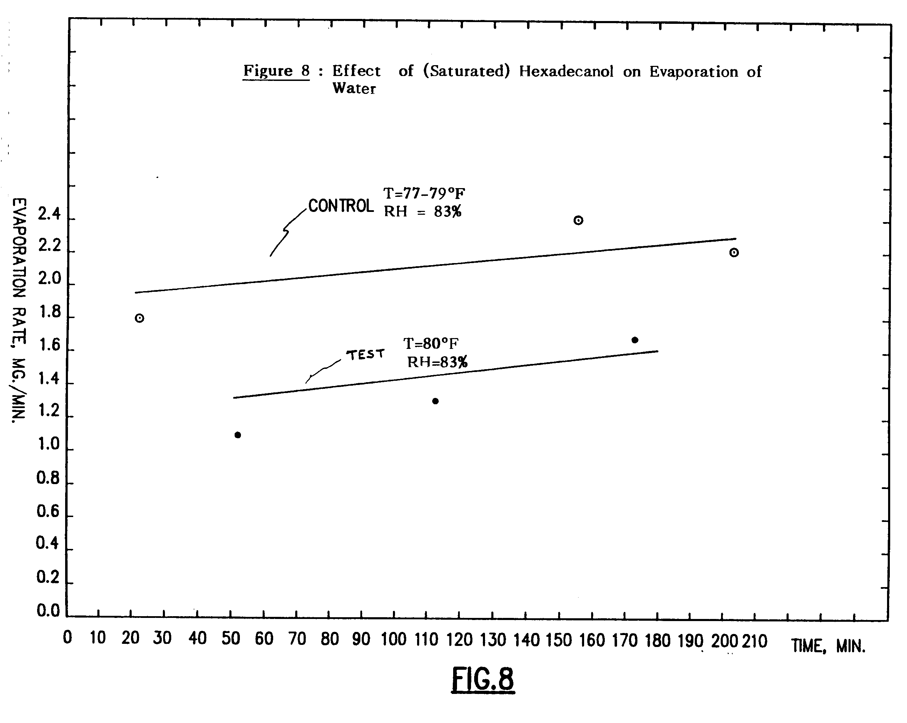

Figure 8 shows the measured evaporation rate of distilled water, with and without inhibitor. Both curves seem to exhibit an upwards slant with elapsed time. This may have been due to creep of water over the surfaces of the shallow test vessel, a phenomenon which would effectively increase surface area for evaporation over time.

At room temperature it is seen that water fully saturated with inhibitor only evaporates about a third less in rate as compared with the control. This is quite different from inhibition of methanolic solution, where the inhibition can bring the evaporation rate to zero under certain condition (water/alcohol ratio, presence of other deicers).

Note the evaporation rate scale in Figure 8 is 1/10 that of Figure 7.

Example 9 - Effect of (saturation concentration) of Hexadecanol on

Evaporation Rate of 70% EtOH/30%$H_2O$

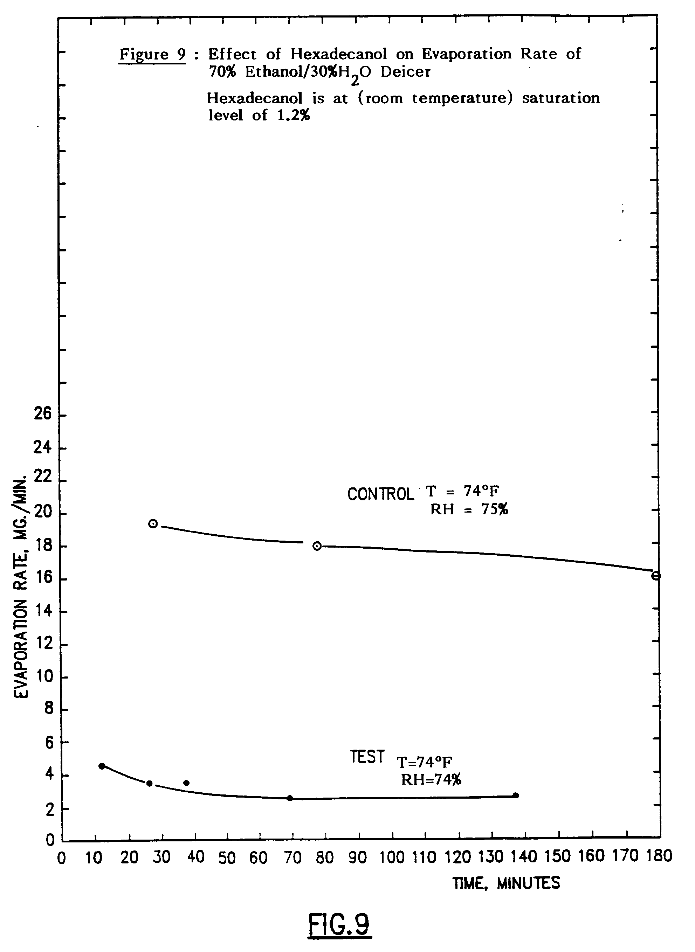

A 70% EtOH/30% $H_2O$ solution was saturated with hexadecanol at 74°F. The saturation concentration was found to be 1.2%. Figure 9 illustrates the effect of inhibitor upon evaporation rate. The inhibited rate is about 18% of the control rate, a significant reduction.

Example 10 - Synethesis of Liquid Deicer Utilizing In situ Chemical Reaction 117. parts of 96.5% MgO were reacted with 337 parts glacial acetic acid in a solution medium containing 7,475 parts absolute methanol and 74 parts 1-hexadecanol. The system was brought to 55°C to accelerate the acid/base reaction. When reaction was complete the system was allowed to settle a small amount of unreacted residue. The clear supernatant has a pH of 7.0, and was used as deicer.

Example 11 - Unanticipated Interactions Between 1-Hexadecanol Inhibitor, Urea, and Temperature

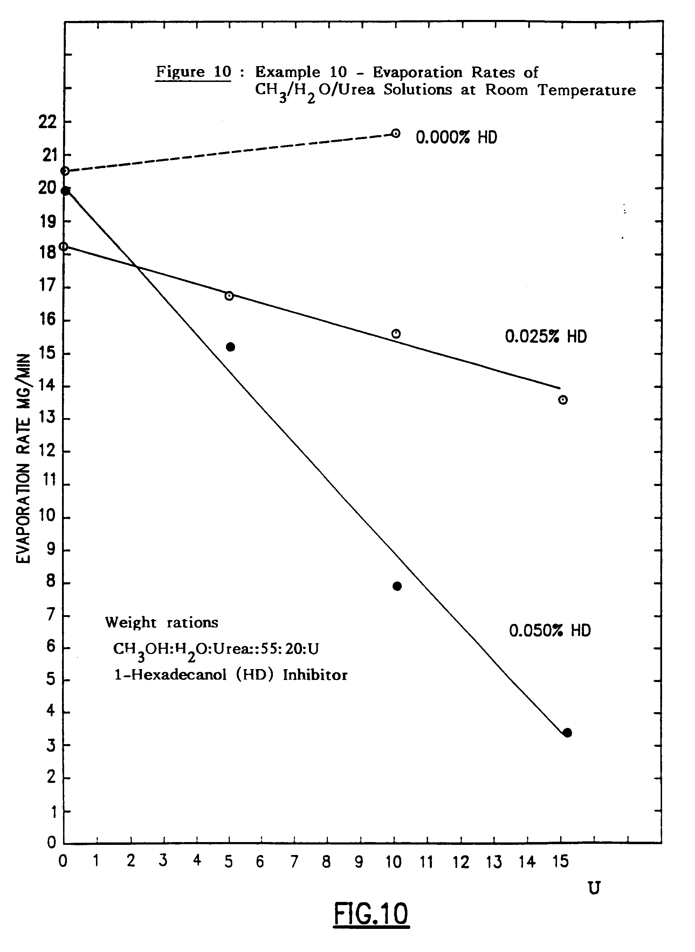

Figure 10 shows the measured room temperature evaporation rates of methanol/water deicer as a function of 1-hexadecanol inhibitor and added urea. The weight ratios are $CH_3OH:H_2O:Urea = 55:20:U$, where U is plotted along the abscissa. The concentrations of inhibitor are based upon total solution, i.e., even containing urea, in each case. Dish diameter is 4.8 cm. at the liquid/air interface.

The evaporation rates are the average rates measured over the initial 30 minutes of evaporation. The shallow dish containing test solutions was constructed of low density polyethylene. This virtually eliminated the "creep" along dish surfaces experienced when using glass dishes.

Note the dramatic difference in the slopes of the curves, as governed by the concentration of inhibitor used. This indicates a specific interaction between inhibitor and urea, a completely unanticipated and beneficial phenomenon. Two general phenomena are seen: 1.) the addition of urea to the system palpably reduces evaporation rate, ceteris parabus; and this influence, I have shown, goes far beyond that to be expected through dilution of the system with a non-volatile component, urea, according to Raoult's Law. 2.) an increase in the concentration of inhibitor affords greater evaporation inhibition, at least in this range.

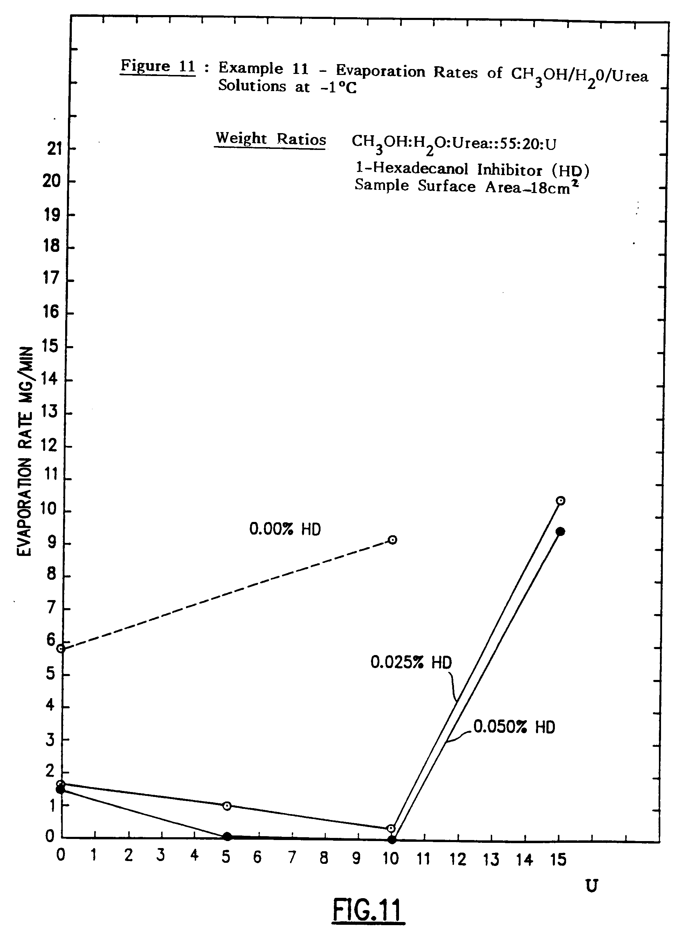

Figure 11 shows the corresponding 1-hour average evaporation rates at -1°C. Without inhibitor present, the addition of urea to the systems appears to render the system prone to greater rather than lesser evaporation rates; this is also seen in Figure 10. This result is unexpected.

With added inhibitor, the effect of urea addition is beneficial, to a point. Then, somewhere between 10 and

U values, the evaporation rate makes a dramatic and unexpected upswing. This same phenomenon was seen in the $CH_3OH;H_2O:Urea = 55:25: U$ system.

The curve indicates that at U=15, the effect of inhibitor is completely nullified by the presence of urea, over the range of inhibitor concentration used. This phenomenon is not seen at room temperature. Hence, I have discovered a complex interaction of urea, inhibitor, and temperature.

Note the optimal range of U values, between 5 and 10, when 0.05% inhibitor is used. The evaporation rate is virtually zero. This is dramatically useful and totally unanticipated finding. To put it differently, it appears that a zero evaporation rate is not possible when using inhibition alone; the synergistic interaction with urea is required to produce a virtually zero rate.

The formulations of the present invention function as deicers, i.e., they help to melt ice and snow already present on the pavement surface. They also function as anti-icers, where they are applied before or during a storm in order to reduce adhesion of snow and ice to the pavement. Furthermore, the compositions of the present invention can even by used as anti-freeze agents according to the well-known understanding and meaning of the term.

Although this invention has been described in connection with specific forms thereof, it will be appreciated by those skilled in the art that a wide variety of equivalents may be substituted for these specific elements and steps of operation shown and described herein, that certain features may be used independently of other features (or in combination with other special features), and that parts may be reversed, all without departing from the spirit and scope of this invention as defined in the appended claims.

## Claims

1.) The deicer/anti-icer composition consisting of methanol, and containing 1,000 - 20,000 ppm of one or more primary aliphatic alcohols having 11 - 20 carbon atoms as evaporation inhibitors.

2.) The composition of Claim 1 wherein the inhibitors contain 14 - 18 carbon atoms.

3.) The deicer/anti-icer composition consisting of methanol, water, and one or more primary aliphatic alcohol evaporation inhibitors wherein

a.) the concentration of methanol relative to methanol/water is 20% to 99.9%

b.) the inhibitors contain 11 - 20 carbon atoms, and

c. the inhibitor concentration falls in the range 100-20,000 ppm.

4.) The composition of claim 3 wherein the inhibitor contain 14 - 18 carbon atoms.

5.) The composition of Claim 3 containing agents which further inhibit applied deicer evaporation rate through interaction with the primary aliphatic alcohol evaporation inhibitors, wherein

a.) the agents are taken from the group ammonium, sodium, potassium, magnesium, calcium chlorides, acetates, nitrates; ammonium, sodium, potassium, magnesium sulfates; urea; formamide; tetra potassium pyrophosphate,

b.) agents are added at concentrations sufficient to suppress applied deicer evaporation rates, and

c.) agents are added at concentrations less than equilibrium saturation levels prevailing at the lowest anticipated deicer storage temperatures.

6.) The composition of Claim 5 wherein the agent is urea.

7.) The composition of Claim 5 wherein the agent is magnesium acetate.

8.) The deicer/anti-icer composition consisting of ethanol, water, and one or more primary aliphatic alcohol evaporation inhibitors, wherein

a.) the concentration of ethanol relative to ethanol/water is 20% to 99%,

b.) the inhibitors contain 11 - 20 carbon atoms, and

c.) the inhibitor concentration falls in the range 1,000 - 20,000 ppm.

9.) The composition of Claim 8 wherein the inhibitors contain 14 - 18 carbon atoms.

10.) The composition of claim 8 containing agents which further inhibit applied deicer evaporation rate through interaction with the primary aliphatic alcohol evaporation inhibitors, wherein

a.) the agents are taken from the group ammonium, sodium, potassium, magnesium, calcium chlorides, acetates, nitrates; ammonium, sodium, potassium, magnesium sulfates; formamide; tetra potassium pyrophosphate,

b.) agents are added at concentrations sufficient to depress applied deicer evaporation rates, and

c.) agents are added at concentrations less than equilibrium saturation levels prevailing at the lowest anticipated deicer storage temperature.

11.) The composition of Claim 10 wherein the agent is urea.

12.) The composition of Claim 10 wherein the agent is magnesium acetate.

**13.)** The deicer/anti-icer composition consisting of methanol, ethanol, water, and one or more primary aliphatic alcohol evaporation inhibitors, wherein

a.) the combined concentration of methanol and ethanol relative to methanol/ethanol/water ranges from 20% to 99.9%,

b.) the concentration of methanol relative to methanol/ethanol is 1% to 99%,

c.) the inhibitors contain 11-20 carbon atoms, and

d.) the inhibitor concentration ranges from 100 to 20,000 ppm.

**14.)** The composition of Claim 13 wherein the inhibitors contain 14 - 18 carbon atoms.

**15.)** The composition of Claim 13 containing agents which further inhibit applied deicer evaporation rate through interaction with the primary aliphatic alcohol evaporation inhibitors, wherein

a.) the agents are taken from the group ammonium, sodium, potassium, magnesium, calcium chlorides, acetates, nitrates; ammonium, sodium, potassium, magnesium sulfates; urea; formamide; tetra potassium pyrophosphate,

b.) agents are added at concentrations sufficient to depress applied deicer evaporation rates, and

c.) agents are added at concentrations less than equilibrium saturation values prevailing at the lowest anticipated deicer storage temperatures.

**16.)** The composition of Claim 15 wherein the agent is urea.

**17.)** The composition of Claim 15 wherein the agent is magnesium acetate.

Figure 1 : Example 1-Effect of 0,5% 1- Decanol
on Evaporation Rate of
$Mg(Ac)_2.4H_2O.4CH_3OH$ Deicer

T = 70-71°F
RH=63%

CONTROL

0.5% DECANOL

$\frac{MG.}{MIN.}$

EVAPORATION RATE

TIME, MINUTES

FIG.1

Figure 2 – Example 2 – Effect of 0,5% Hexadecanol on Evaporation Rate of $Mg(Ac)_2 \cdot 4H_2O.7CH_3OH$ Deicer

T= 74°F
RH = 66%

CONTROL

0.5% HEXADECANOL

EVAPORATION RATE $\frac{MG.}{MIN.}$

TIME, MIN.

FIG.2

Figure 3 : Example 3 – Effect of 0,5% Dodecanol on Evaporation Rate of $Mg(Ac)_2 \cdot 4H_2O \cdot 7CH_3OH$ Deicer

T= 72–75 %
RH=78%

FIG.3

FIG.4

FIG.5

22

Figure 6: Example 6 – Effect of Added Urea upon Evaporation Rate of Inhibited (0.025% 1-Hexadecanol) 68.75% Methanol/31.25% Water System

FIG.6

Figure 7 : Example 7 – Effect of (Saturation level of)
Octadecanol on the Evaporation of
56%MeOH/24% $H_2O$/20% Urea Solution Deicer

FIG.7

Figure 8 : Effect of (Saturated) Hexadecanol on Evaporation of Water

## FIG.8

Figure 9 : Effect of Hexadecanol on Evaporation Rate of
70% Ethanol/30%$H_2O$ Deicer

Hexadecanol is at (room temperature) saturation
level of 1.2%

FIG.9

Figure 10 : Example 10 - Evaporation Rates of $CH_3/H_2O/Urea$ Solutions at Room Temperature

FIG.10

FIG.11

EP 0 490 796 A1

**European Patent Office**

# EUROPEAN SEARCH REPORT

Application Number

| DOCUMENTS CONSIDERED TO BE RELEVANT | | | EP 91420447.4 |
|---|---|---|---|
| Category | Citation of document with indication, where appropriate, of relevant passages | Relevant to claim | CLASSIFICATION OF THE APPLICATION (Int. Cl.5) |
| A | EP - A - 0 383 706 (GANCY) * Claims; examples * -- | 1,8,13 | C 09 K 3/18 |
| A | WORLD PATENTS INDEX (Online), ACCESSION NO. 80-68 425C, DERWENT PUBLICATIONS LTD., London & JP-A-55-104 379 -- | 1,8,13 | |
| A | WORLD PATENTS INDEX (Online), ACCESSION NO. 81-38 786D, DERWENT PUBLICATIONS LTD., London. & JP-A-56-36 565 ---- | 1,8,13 | |

TECHNICAL FIELDS
SEARCHED (Int. Cl.5)

C 09 K

The present search report has been drawn up for all claims

| Place of search | Date of completion of the search | Examiner |
|---|---|---|
| VIENNA | 13-03-1992 | MARCHART |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P0401)

29